# EUROPÄISCHE PATENTSCHRIFT

(11) **EP 1 218 132 B1**
(45) Veröffentlichungstag und Bekanntmachung des Hinweises auf die Patenterteilung: **18.06.2003**
(21) Anmeldenummer: 00962513.8
(22) Anmeldetag: 21.09.2000
(51) Int. Cl.: B23B 1/00

(54) **MINIATURBOHRFUTTER**
MINIATURE DRILL CHUCK
PORTE-FORET MINIATURE

(30) Priorität: 23.09.1999 DE 19945551
(43) Veröffentlichungstag der Anmeldung: 03.07.2002
(73) Patentinhaber: Robert Schröder GmbH & Co. KG, 42369 Wuppertal (DE)
(72) Erfinder: NEBE, Gerd, 42369 Wuppertal (DE); CASEL, Herbert, 42369 Wuppertal (DE)
(74) Vertreter: Füssel, Michael
(86) Internationale Anmeldenummer: EP0009228
(87) Internationale Veröffentlichungsnummer: WO01021348

(56) Entgegenhaltungen:
- US-A- 1 542 826
- US-A- 2 413 422
- US-A- 3 712 633

## Beschreibung

Die vorliegende Erfindung betrifft ein Miniaturbohrfutter nach Oberbegriff von Anspruch 1.

Derartige Miniaturbohrfutter sind allgemein bekannt (Hitachi bzw. Goodell).

Das Prinzip derartiger Miniaturbohrfutter beruht auf einem rückseitig in das Bohrfuttergehäuse eingebrachten Gewinde, in welches ein korrespondierendes Gewinde der Maschinenspindel eingeschraubt ist.

Durch langsames Zustellen dieser Gewindepaarung wird auf die innerhalb des Bohrfutterkopfes angeordneten Klemmbacken eine Wegverschiebung in Richtung zur Aufnahmeöffnung ausgeübt, welche die Klemmbacken in ihre Klemmstellung zusammenrücken läßt.

Dies erfolgt unter Verlagerung der Klemmbacken entgegen einer in Umfangsrichtung wirkenden Vorspannkraft, so daß bei entgegengesetzter Drehbewegung des Miniaturbohrfutters relativ zur Maschinenspindel die Klemmbacken aus ihrer Klemmstellung in die Freigabestellung zurückverlagert werden.

Von derartigen Miniaturbohrfuttern zu unterscheiden sind herkömmliche Bohrfutter, bei denen die Zustellbewegung der Klemmbacken über einen Bohrfutterkranz mit Zahnrad in Verbindung mit einem speziellen Bohrfutterschlüssel eingeleitet wird.

Da derartige Miniaturbohrfutter insbesondere für hohe bis sehr hohe Drehzahlen ausgelegt sind, findet der Gegenstand der vorliegenden Anmeldung bevorzugt Anwendung bei Miniaturbohrfuttern mit einer Spannweite bis zu etwa 6 mm Durchmesser und für Drehzahlen oberhalb von 10.000 U/min.

Das besondere Problem bei diesen hohen Drehzahlen ist die Vibrationsfreudigkeit des gesamten Antriebsstrangs vom Motor bis zum Werkzeug, die insbesondere auch beim Durchlaufen der kritischen Drehzahlen zu einer Schwingungsanregung des gesamten Systems beiträgt. Es kommt daher wesentlich darauf an, derartige Miniaturbohrfutter eigenvibrationsarm über den gesamten Drehzahlbereich zu fertigen.

Unter sehr hohen Drehzahlen sind in der vorliegenden Anmeldung Drehzahlen zu verstehen, die oberhalb von 20.000 liegen.

Unter diesen Voraussetzungen ist es Aufgabe der Erfindung, das bekannte Miniaturbohrfutter so zu verbessern, daß es unter verringerter Vibration im gesamten Drehzahlbereich auch bei Drehzahlen oberhalb von 20.000 U/min eine gute Klemmwirkung hervorruft.

Diese Aufgabe löst die Erfindung mit den Merkmalen des Hauptanspruchs.

Wesentlich für die Erfindung ist eine enge Passung zwischen dem Außendurchmesser des Druckstücks und der zugeordneten Innenbohrung des Bohrfuttergehäuses, die eine radiale Verlagerung des Druckstücks im Bohrfuttergehäuse in allen Betriebszuständen zuverlässig ausschließt.

Zu diesen Zweck ist eine Führungsbohrung im Bohrfuttergehäuse vorgesehen, innerhalb derer das Druckstück umfangmäßig geführt ist und über seinen gesamten möglichen Hub auch geführt bleibt.

Da das Druckstück bei der Zustellbewegung der Klemmbacken längsverschieblich innerhalb des Bohrfuttergehäuses gelagert sein muß, muß die Forderung nach einer engen Führungspassung zwischen Druckstück und Führungsbohrung auf dem gesamten Hub des Druckstücks gelten.

Hieraus ergibt sich der Vorteil, daß die dynamischen Wuchtverhältnisse des Miniaturbohrfutters über den gesamten zu durchlaufenden Drehzahlbereich bis zur Höchstdrehzahl erhalten bleiben. Die Besonderheit der Erfindung beruht daher auf einer in Radialrichtung engen jedoch in Axialrichtung beweglichen Passung des Druckstücks innerhalb der Führungsbohrung.

Diese Forderung läßt sich bei den Miniaturbohrfuttern deshalb erfüllen, da infolge der nur geringen Spanndurchmesser derartiger Miniaturbohrfutter die radialen Verlagerungen des Druckstücks innerhalb der Führungsbohrung bis zu höchsten Drehzahlen praktisch ohne Auswirkungen bleiben.

Zweckmäßigerweise ist die Führungsbohrung im Bohrfutterstopfen vorgesehen. Diese Maßnahme bietet den Vorteil eines sehr leichten Bohrfutterkopfes, so daß die mit relativ großem Abstand zur Maschinenspindel vorliegenden Massen auch relativ gering bleiben.

Sieht man am Bohrfutterstopfen eine umfangsmäßige Rändelung vor, über welche eine Presspassung in einer zugeordneten Bohrung des Bohrfutterkopfes erzielt wird, läßt sich der Montageaufwand für das Bohrfuttergehäuse erheblich reduzieren. Trotzdem wird über die Umfangsrändelung stets eine genaue Zentrierung des Bohrfutterstopfens im Bohrfutterkopf erzielt.

Wesentlich für die Erfindung ist eine exakte Führung des Druckstücks im Bohrfuttergehäuse über den gesamten Hub. Zu diesem Zweck wird vorgeschlagen, daß die Länge des Druckstücks in der Führungsbohrung mindestens etwa so groß wie der Durchmesser des Druckstücks ist. Diese Maßnahme unterbindet die Tendenz zu kurzer Druckstücke gegen Verkanten und gewährleistet einen umwuchtfreien Betrieb.

Zusätzlich kann vorgesehen sein, daß das Druckstück rotationssymmetrisch erleichtert ist, um die bewegten Massen zusätzlich zu verringern. Zu diesem Zweck kann das Druckstück an seinem Umfang eine Außennut aufweisen. Ggfs. kann das Druckstück auch zusätzlich hülsenartig hohl sein. Ergänzend oder zusätzlich kann auch vorgesehen sein, den Bohrfutterstopfen mit entsprechenden Leichterungsmaßnahmen auszustatten. Hierzu können ohne weiteres Umfangsnuten, Radialbohrungen, Materialausnehmungen dienen, solange diese rotationssymmetrisch angebracht sind.

Diese Maßnahmen zur Erleichterung der rotierenden Masse betreffen daher zwar vorrangig das Druckstück. Dennoch sollen auch zumindest am Bohrfutterstopfen bzw. am Bohrfutterkopf entsprechende Erleichterungsmaßnahmen zur Anwendung kommen können, die von der vorliegenden Erfindung mitumfaßt sind.

Um eine weitere Verbesserung der Führung des Druckstücks zu erzielen, kann das spindelseitige Ende des Druckstücks gegenüber dem Innendurchmesser des Bohrfutterstopfens auf einen verkleinerten Außendurchmesser abgearbeitet sein, so daß zwischen dem Bohrfutterstopfen und dem Druckstück ein Ringspaltraum entsteht. In diesen Ringspaltraum kann eine hohlzylindrische Maschinenspindel hineingedreht sein, die sich mit einem Außengewinde auf einem korrespondierenden Innengewinde des Bohrfutterstopfens abstützt, während sie zugleich mit ihrem Stirnbereich zur Verlagerung des Druckstücks herangezogen wird.

Zur Zentrierung des Druckstücks kann zusätzlich ein zentrische Kegelstumpffläche vorgesehen sein, die am Boden des Ringspaltraums angeordnet ist. Auf dieser zentrischen Kegelstumpffläche soll eine korrespondierende Kegelstumpffläche der Antriebsspindel aufsitzen.

Um einen zusätzlichen Hebelarm zur Erzielung der Klemmstellung der Klemmbacken zur Verfügung zu haben, können sich rotationssymmetrisch gegenüberliegende Schlüsselflächen am Bohrfutterkopf bzw. am Bohrfutterstopfen vorgesehen sein.

Im folgenden wird die Erfindung anhand eines Ausführungsbeispiels näher erläutert.

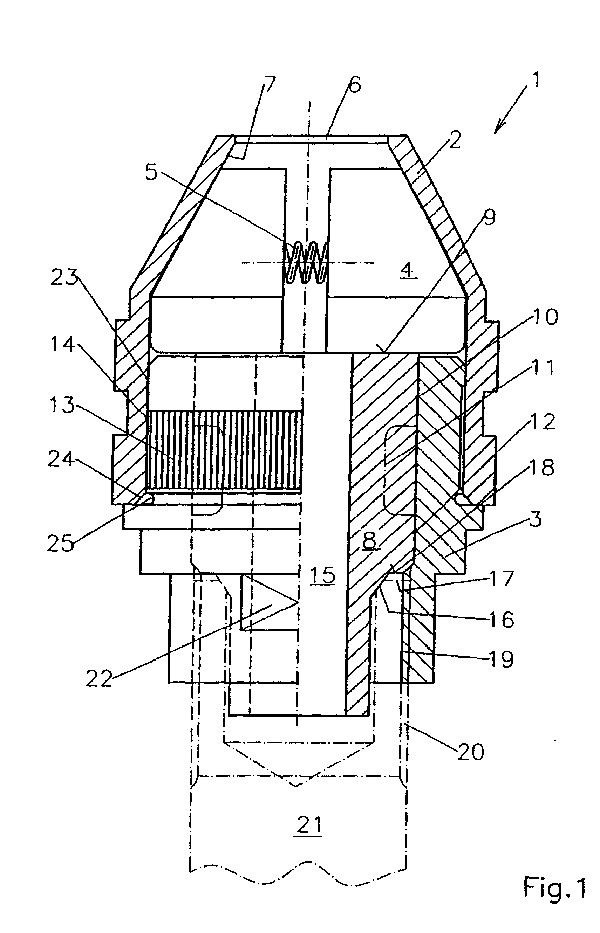

- Fig.1: zeigt ein Miniaturbohrfutter 1 nach dieser Erfindung.

Ein derartiges Miniaturbohrfutter 1 weist ein Bohrfuttergehäuse auf, welches aus einem Bohrfutterkopf 2 und einem Bohrfutterstopfen 3 zusammengesetzt ist. Der Bohrfutterkopf 2 ist starr mit dem Bohrfutterstopfen 3 zusammengebaut und nimmt in dem gemeinsamen Innenraum - zumeist - drei Klemmbacken 4 auf, deren Außenkontur in Richtung zur Aufnahmeöffnung 6 kegelartig zusammenläuft. Die Klemmbacken 4 stehen in Umfangsrichtung unter dem Einfluß von Vorspannfedern 5, welche der Auswärtsverlagerung der Klemmbacken 4 dienen. Dabei geraten die Außenflächen der Klemmbacken 4 an eine korrespondierend konisch zulaufende Innenwand 7 des Bohrfutterkopfs 2. Es entsteht somit eine formschlüssige Führung der Klemmbacken 4 an der Innenwand 7 des Bohrfutterkopfs 2.

Zur Verlagerung der Klemmbacken 4 aus der gezeigten Offenstellung in eine Klemmstellung dient ein Druckstück 8, welches auf der rückwärtigen Kontaktfläche 9 an den Klemmbacken formschlüssig anliegt.

Das Druckstück 8 setzt sich von der Kontaktfläche 9 ausgehend bis in den hinteren Bereich des Bohrfutterstopfens 3 fort und wirkt dort mit einer entsprechenden Gegenfläche der Maschinenspindel 21 zusammen. Zu diesem Zweck liegt die Maschinenspindel 21 im formschlüssigen Kontakt auf einer Gegenfläche des Druckstücks 8 auf. An ihrem Außendurchmesser weist die Maschinenspindel 21 ein Spindelgewinde 20 auf, welches mit einem Einschraubgewinde 19 am Innenumfang des Bohrfutterstopfens 3 zusammenwirkt.

Auf diese Weise kann das Bohrfuttergehäuse bezüglich der Maschinenspindel 21 ein- bzw. ausgeschraubt werden.

Dabei wird das Druckstück 8 infolge des formschlüssigen Kontakts zur Maschinenspindel 21 in Richtung zur Aufnahmeöffnung 6 verlagert. Über die Kontaktfläche 9 zwischen Druckstück 8 und den Klemmbacken 4 werden die Klemmbacken während dieser Verlagerung in diesselbe Richtung mitgenommen und rücken infolge der formschlüssigen Führung auf der konischen Innenwand des Bohrfutterkopfs 2 in die Klemmstellung zusammen.

Wesentlich ist nun, daß das Druckstück 8 auf seinem gesamten Hub umfangsmäßig zentriert in einer Führungsbohrung des Bohrfuttergehäuses längsverschieblich ist. Dies wird dadurch erzielt, daß zwischen dem Außenumfang des Druckstücks 8 und dem Innenumfang des Futterstopfens eine oder mehrere Zentrierzonen 10,12 bereitgestellt werden. In diesen Zentrierzonen besteht zwischen dem Druckstück 8 und dem Bohrfutterstopfen 2 eine in radialer Richtung hinreichend enge jedoch in axialer Richtung hinreichend freigängige Passung, so daß auch bei Verlagerung der Klemmbacken 4 in die Klemmstellung für kleinste Werkzeugdurchmesser stets die Führungsfunktion zwischen Druckstück 8 und Bohrfutterstopfen 3 aufrechterhalten bleibt.

Es kommt daher wesentlich auf die Kombination einer in Radialrichtung praktisch wackelfreien jedoch in Axialrichtung klemmfrei beweglichen Passung zwischen Druckstück und dem Bohrfuttergehäuse an. Im vorliegenden Fall wird diese Passung allerdings von einer Führungsbohrung realisiert, die im Bohrfutterstopfen 3 vorgesehen ist. Um dennoch eine exakte Zentrierung des Bohrfutterstopfens 3 im Bohrfutterkopf 2 zu erzielen, besteht am Außenumfang des Bohrfutterstopfens 3 eine Rändelung 13, die einen im Verhältnis zum Innendurchmesser des Bohrfutterkopfs 2 geringfügig größeren Außendurchmesser aufweist. Beim Einpressen des Bohrfutterstopfens 3 in den Bohrfutterkopf 2 entsteht daher im Bereich der Rändelung 13 eine Klemmzone 14, die infolge der rotationssymmetrischen Einklemmung des Bohrfutterstopfens auch rotationssymmetrisch ist. Darüber hinaus sorgt die Rändelung für eine drehfeste Verbindung zwischen Bohrfutterkopf 2 und Bohrfutterstopfen 3. Die Rändelung erstreckt sich lediglich über eine Teillänge des eingesteckten Bohrfutterstopfens. Der vordere Teil 23 des Bohrfutterstopfens weist keine Rändelung auf. Der Außendurchmesser des vorderen Teils 23 ist im Sinne einer spielfreien engen Passung an den Innendurchmesser des Bohrfutterkopfs angepaßt. Auf diese Weise entsteht ein kombinatorischer Effekt zwischen der engen Passung am vorderen Teil 23 des Bohrfutterstopfens und der konzentrischen Rändelung. Beim Eintreiben des Bohrfutterstopfens in den Bohrfutterkopf zentriert sich der vordere Teil 23 des Bohrfutterstopfens exakt und spielfrei in der Bohrung des Bohrfutterkopfs bis die Rändelung mit ihren vorne beginnenden Rippen ebenfalls auf die Bohrung des Bohrfutterkopfes 2 stößt. Dann ist bereits eine exakt rotationssymmetrische Passung zwischen Bohrfutterstopfen 3 und Bohrfutterkopf 2 realisiert. Beim weiteren Eintreiben des Bohrfutterstopfens kann sich die Rändelung unter der vorauslaufenden zentrischen Führung des vorderen Teils 23 so verquetschen. daß zusätzlich eine exakt zentrische Passung auch im Bereich der Rändelung sichergestellt ist.

Ferner läuft die Rändelung nicht über die gesamte Einstecklänge des Bohrfutterstopfens 3 im Bohrfutterkopf 2. Auch im hinteren Teil des Bohrfutterstopfens ist eine glatte zylindrische Sitzfläche zwischen dem Bohrfutterstopfen 3 und dem Bohrfutterkopf 2 realisiert.

Wesentlich ist auch, daß die Einpreßtiefe des Bohrfutterstopfens 3 durch Anschlag seines endseitigen umlaufenden Kragens an die Endstirnfläche des Bohrfutterkopfes 2 eindeutig begrenzt ist. Dabei ist im inneren Umfangsbereich des umlaufenden Kragens am Bohrfutterkopf 2 eine Fase 24 oder ähnliches vorgesehen, um schädliche Doppelpassungen zu vermeiden. Zusätzlich weist der Bohrfutterstopfen 3 am unteren Ende des geradzylindrischen Längsbereichs im Bereich des Übergangs in den als Anschlag dienenden Kragen einen Einstich 25 auf. Dieser Einstich ist zusätzlich vorgesehen, um gegebenenfalls abgeschälte Späne oder dergleichen der Rändelung 13 bei der Montage des Bohrfutterstopfens 3 zu veranlassen, sich dort abzusetzen. Diese Maßnahme bietet den Vorteil, daß in diesem zur Zentrierung wichtigen Längsbereich des Bohrfutterstopfens keine Zwängungen durch überschüssiges Material auftreten können.

Diese Maßnahme bietet daher die Möglichkeit, daß Miniaturbohrfutter nach dieser Erfindung ohne zusätzliches Werkzeug auf der Maschinenspindel 21 auf- bzw. von der Maschinenspindel 21 loszuschrauben.

Weiterhin zeigt Fig.1., daß eine hinreichend lange Zentrierzone zwischen Druckstück 8 und Bohrfutterstopfen 3 besteht, die zumindest über den gesamten Hub des Druckstücks 8 erhalten bleibt.

Zusätzlich ist vorgesehen, daß das Druckstück 8 aus einem Vollmaterial besteht, welches rotationssymmetrisch erleichtert ist.

Zu diesem Zweck können am Außenumfang des Druckstücks 8 Umfangsnuten 11 vorgesehen sein, die jedoch vorzugsweise zwischen einer vorderen Zentrierzone 10 und einer hinteren Zentrierzone 12 angeordnet sind.

Diese Maßnahme bietet den zusätzlichen Vorteil, daß die Wandkontaktfläche zwischen Außenumfang des Druckstücks und Innendurchmesser des Bohrfutterstopfens 3 verringert wird. Hierdurch wird die Leichtgängigkeit des Druckstücks 8 in Axialrichtung begünstigt, ohne daß die radiale Spielfreiheit beeinträchtigt werden muß. Zusätzlich ist als Erleichterungsmaßnahme vorgesehen, das Druckstück 8 mit einer Längsbohrung 15 auszuhöhlen.

Weiterhin zeigt Fig.1, daß das spindelseitige Ende des Druckstücks 8 gegenüber dem Innendurchmesser des Bohrfutterstopfens 3 einen verkleinerten Außendurchmesser aufweist, und daß in den Ringspaltraum zwischen dem Innendurchmesser des Bohrfutterstopfens 3 und dem Außendurchmesser des Druckstücks 8 eine hohlzylindrische Maschinenspindel 21 hineinragt.

Zu diesem Zweck ist das freie Ende der Maschinenspindel 21 mit einem Spindelgewinde 20 versehen, welches in ein korrespondierendes Einschraubgewinde 19 am spindelseitigen Ende des Bohrfutterstopfens soweit eingeschraubt ist, daß die Stirnfläche der Maschinenspindel 21 in Kontakt mit einer zugeordneten Abstützfläche am Druckstück 8 gerät.

Zu diesem Zweck weist das Druckstück 8 eine zentrische Kegelstumpffläche 16 auf, die sich im Bodenbereich des Ringspaltraums befindet. Diese zentrische Kegelstumpffläche 16 gerät bei hinreichend tief eingeschraubter Maschinenspindel 21 mit einer korrespondierenden Kegelstumpffläche der Antriebsspindel 21 in unmittelbaren Kontakt. Die mittleren Durchmesser und die Kegelwinkel beider Kegelstumpfflächen entsprechen sich genau, so daß eine zusätzliche Zentrierung des Druckstücks 8 im hinteren Bereich erfolgt. Dabei liegt die Stirnfläche 17 der Maschinenspindel 21 frei, so daß die einzige Passung über die Kontaktzonen der zugeordneten Kegelstumpfflächen erfolgt. Es besteht daher zwischen dem Boden 18 des Ringspaltraums und der gegenüberliegenden Stirnfläche 17 der Maschinenspindel 21 ein berührungsfreies Spiel, so daß eine zuverlässige Zentrierung des Druckstücks 8 auch im hinteren Bereich erzielt wird.

Ergänzend hierzu kann am Außenumfang des spindelseitigen Endes des Bohrfuttergehäuses eine Paarung aus rotationssymmetrischen Schlüsselflächen 22 vorgesehen sein, mit deren Hilfe auch ein festsitzendes Miniaturbohrfutter aus der Klemmstellung gelöst werden kann.

Wesentlich für das Miniaturbohrfutter nach dieser Erfindung ist die erzielbare hohe Eigenfrequenz der gesamten Baugruppe, die aus der Kombination einer relativ kurzen Bauhöhe in Verbindung mit sehr kurzen Klemmbacken erzielt wird.

Dadurch wird der Rundlauf des Miniaturbohrfutters über den gesamten Drehzahlbereich sichergestellt. Hieraus resultiert der erforderliche Rundlauf des eingespannten Werkzeugs insbesondere beim Durchfahren der sogenannten kritischen Drehzahlen. Die Vermeidung von unnötigen Eigenvibrationen bietet den zusätzlichen Vorteil, daß die erforderlichen Einspannkräfte zwischen Klemmbacken und Werkzeug aufrecht erhalten bleiben. Das gesamte Miniaturbohrfutter weist ausschließlich exakt zentrierte Bauteile auf, die in ihrem Zusammenwirken trotz ihrer relativen Beweglichkeit zueinander hohe Klemmkräfte eigenschwingungsfrei realisieren.

### Bezugszeichenliste:

- 1: Miniaturbohrfutter
- 2: Bohrfutterkopf
- 3: Bohrfutterstopfen
- 4: Klemmbacke
- 5: Vorspannfeder
- 6: Aufnahmeöffnung
- 7: Innenwand
- 8: Druckstück
- 9: Kontaktfläche
- 10: vordere Zentrierzone
- 11: Umfangsnut
- 12: hintere Zentrierzone
- 13: Rändelung
- 14: Klemmzone
- 15: Längsbohrung
- 16: zentrische Kegelstumpffläche
- 17: Stirnfläche der Maschinenspindel
- 18: Boden des Ringspaltraums
- 19: Einschraubgewinde
- 20: Spindelgewinde
- 21: Maschinenspindel
- 22: Schlüsselfläche
- 23: vorderes Passungsteil
- 24: Fase
- 25: Einstich

## Patentansprüche

1. Miniaturbohrfutter (1), welches geeignet ist für Drehzahlen oberhalb von 10000/min, mit einem Bohrfuttergehäuse bestehend aus einem Bohrfutterkopf (2) und einem antriebsseitig sitzenden Bohrfutterstopfen (3) mit zentralem Einschraubgewinde (19) für eine Maschinenspindel (21), wobei der Bohrfutterkopf (2) eine in Richtung zur Aufnahmeöffnung (6) für ein Bohr-, Fräs- oder Schleifwerkzeug konisch zulaufende Innenwand (7) aufweist, an welcher korrespondierend konische Klemmbacken (4) längsverschieblich und unter einer in Umfangsrichtung wirkenden Vorspannkraft (5) geführt sind, wobei die Klemmbacken (4) auf ihrer rückwärtigen Fläche (9) von einem Druckstück (8) beaufschlagt werden, das durch Einschrauben des Bohrfuttergehäuses in die Maschinenspindel (21) unter gleichzeitiger Mitnahme der dabei in Klemmstellung zusammenrückenden Klemmbacken (4) in Richtung zur Aufnahmeöffnung (6) verlagert wird, **dadurch gekennzeichnet, daß** das Druckstück (8) auf seinem gesamten Hub umfangsmäßig zentriert (10,12) in einer Führungsbohrung des Bohrfuttergehäuses längsverschieblich ist, wozu zwischen Druckstück (8) und Führungsbohrung eine enge Führungspassung vorgesehen ist, und daß das Druckstück (8) eine zentrische Kegelstumpffläche aufweist, wobei die Maschinenspindel (21) das Druckstück (8) über eine Paarung zwischen zwei korrespondierenden Kegelstumpfflächen (16) zentrierend beaufschlagt.

2. Miniaturbohrfutter nach Anspruch 1, **dadurch gekennzeichnet, daß** die Führungsbohrung im Bohrfutterstopfen (3) vorgesehen ist.

3. Miniaturbohrfutter nach Anspruch 1 oder 2, **dadurch gekennzeichnet, daß** der Bohrfutterstopfen (3) über eine Rändelung (13) in den Bohrfutterkopf (2) drehfest eingepreßt ist.

4. Miniaturbohrfutter nach Anspruch 3, **dadurch gekennzeichnet, daß** sich die Rändelung (13) lediglich über einen Teillängsbereich des Bohrfutterstopfens erstreckt und daß die nicht gerändelten Längsbereiche über spielfreie Passungen in eine korrespondierende Bohrung des Bohrfutterkopfes eingesteckt sind.

5. Miniaturbohrfutter nach Anspruch 3 oder 4, **dadurch gekennzeichnet, daß** der Bohrfutterstopfen (3) endseitig einen umlaufenden Kragen bildet, der als Einsteckanschlag auf der rückwärtigen Stirnfläche des Bohrfutterkopfes (2) aufliegt und daß zwischen dem umlaufenden Kragen und dem Ende der Rändelung ein ringförmiger Einstich (25) am Bohrfutterstopfen vorgesehen ist.

6. Miniaturbohrfutter nach einem der Ansprüche 1 bis 5, **dadurch gekennzeichnet, daß** die Länge des Druckstücks (8) in der Führungsbohrung mindestens etwa dem Durchmesser des Druckstücks entspricht.

7. Miniaturbohrfutter nach einem der Ansprüche 1 bis 6, **dadurch gekennzeichnet, daß** das Druckstück (8) aus einem Vollmaterial besteht, welches rotationssymmetrisch erleichtert ist.

8. Miniaturbohrfutter nach Anspruch 7, **dadurch gekennzeichnet, daß** das Druckstück (8) an seinem Umfang eine Umfangsnut (11) aufweist.

9. Miniaturbohrfutter nach Anspruch 7 oder 8, **dadurch gekennzeichnet, daß** das Druckstück (8) hülsenartig hohl (15) ist.

10. Miniaturbohrfutter nach einem der Ansprüche 1 bis 9, **dadurch gekennzeichnet, daß** das spindelseitige Ende des Druckstücks (8) gegenüber dem Innendurchmesser des Bohrfutterstopfens einen verkleinerten Außendurchmesser aufweist und daß in den Ringspaltraum zwischen Innendurchmesser des Bohrfutterstopfens (3) und Außendurchmesser des Druckstücks (8) eine hohlzylindrische Maschinenspindel (21) hineinragt.

11. Miniaturbohrfutter nach Anspruch 10, **dadurch gekennzeichnet, daß** das Druckstück (8) am Boden (18) des Ringspaltraums eine zentrische Kegelstumpffläche (16) aufweist, auf welcher eine korrespondierende Kegelstumpffläche der Maschinenspindel (21) aufsitzt.

12. Miniaturbohrfutter nach einem der Ansprüche 1 bis 11, **dadurch gekennzeichnet, daß** das Bohrfuttergehäuse paarweise sich gegenüberliegende Schlüsselflächen (22) aufweist.

13. Miniaturbohrfutter nach Anspruch 12, **dadurch gekennzeichnet, daß** die Schlüsselflächen am Bohrfutterstopfen (3) angebracht sind.

## Claims

1. Miniature drill chuck (1), which is suitable for rotational speeds in excess of 10000/min, having a drill chuck housing consisting of a drill chuck head (2) and a drill chuck stopper (3) which is located on the drive side and has a central screw-in thread (19) for a machine spindle (21), wherein the drill chuck head (2) comprises an inner wall (7) tapering conically in the direction of the receiving orifice (6) for a drilling, milling or abrading tool, against which wall correspondingly conical clamping jaws (4) are guided in a longitudinally displaceable manner and under a pretensioning force (5) acting in the peripheral direction, wherein the clamping jaws (4) are acted upon on their rear surface (9) by a thrust piece (8) which is displaced in the direction of the receiving orifice (6) by the drill chuck housing being screwed into the machine spindle (21), and simultaneously moves with it the clamping jaws (4) which thus move towards each other into the clamping position, **characterised in that** the thrust piece (8) is longitudinally displaceable in a guiding bore of the drill chuck housing in such a way that it is circumferentially centred (10, 12) throughout its entire stroke, for which purpose a narrow guiding fit is provided between the thrust piece (8) and the guiding bore, and that the thrust piece (8) comprises a central truncated conical surface, wherein the machine spindle (21) acts upon the thrust piece (8) in a centring manner by virtue of a pairing between two corresponding truncated conical surfaces (16).

2. Miniature drill chuck as claimed in claim 1, **characterised in that** the guiding bore is provided in the drill chuck stopper (3).

3. Miniature drill chuck as claimed in claim 1 or 2, **characterised in that** the drill chuck stopper (3) is pressed into the drill chuck head (2) in a non-rotatable manner by way of reeding (13).

4. Miniature drill chuck as claimed in claim 3, **characterised in that** the reeding (13) extends only over a partial longitudinal region of the drill chuck stopper and that the non-reeded longitudinal regions are inserted with play-free fit into a corresponding bore of the drill chuck head.

5. Miniature drill chuck as claimed in claim 3 or 4, **characterised in that** the drill chuck stopper (3) forms a circumferential collar on the end side, which collar lies as an insert stop on the rear end surface of the drill chuck head (2) and that between the circumferential collar and the end of the reeding an annular undercut (25) is provided on the drill chuck stopper.

6. Miniature drill chuck as claimed in any one of claims 1 to 5, **characterised in that** the length of the thrust piece (8) in the guiding bore corresponds at least approximately to the diameter of the thrust piece.

7. Miniature drill chuck as claimed in any one of claims 1 to 6, **characterised in that** the thrust piece (8) consists of a solid material which is lightened in a rotationally symmetrical manner.

8. Miniature drill chuck as claimed in claim 7, **characterised in that** the thrust piece (8) comprises a peripheral groove (11) on its periphery.

9. Miniature drill chuck as claimed in claim 7 or 8, **characterised in that** the thrust piece (8) is hollow (15) in the manner of a sleeve.

10. Miniature drill chuck as claimed in any one of claims 1 to 9, **characterised in that** the spindle-side end of the thrust piece (8) has an outer diameter which is reduced with respect to the inner diameter of the drill chuck stopper, and that a hollow-cylindrical machine spindle (21) protrudes into the annular gap space between the inner diameter of the drill chuck stopper (3) and the outer diameter of the thrust piece (8).

11. Miniature drill chuck as claimed in claim 10, **characterised in that** the thrust piece (8) comprises a cental truncated conical surface (16) at the bottom (18) of the annular gap space, on which truncated conical surface a corresponding truncated conical surface of the machine spindle (21) is positioned.

12. Miniature drill chuck as claimed in any one of claims 1 to 11, **characterised in that** the drill chuck housing comprises key surfaces (22) lying opposite each other in pairs.

13. Miniature drill chuck as claimed in claim 12, **characterised in that** the key surfaces are provided on the drill chuck stopper (3).

## Revendications

1. Mandrin porte-foret miniature (1) approprié pour des vitesses de rotation supérieures à 10000 t/min., comportant une enveloppe de mandrin composée d'une tête de mandrin (2) et d'un bouchon de mandrin (3) placé côté entraînement et pourvu d'un filetage de vissage central (19) pour une broche de machine (21), la tête de mandrin (2) présentant une paroi intérieure (7) qui s'étend suivant une forme conique vers l'ouverture de réception (6) prévue pour un outil de perçage, de fraisage ou de rectification et sur laquelle des mâchoires de serrage (4) d'une forme conique correspondante sont mobiles longitudinalement, avec une force de contrainte (5) qui agit dans le sens circonférentiel, et les mâchoires de serrage (4) étant sollicitées sur leur surface arrière (9) par un élément de pression (8) qui est déplacé vers l'ouverture de réception (6) grâce au vissage de l'enveloppe de mandrin dans la broche de machine (21), en entraînant en même temps lesdites mâchoires (4) qui sont alors amenées dans la position de serrage, **caractérisé en ce que** l'élément de pression (8), sur toute sa course, est mobile longitudinalement dans un perçage de guidage de l'enveloppe de mandrin avec un centrage circonférentiel (10, 12), un ajustement de guidage étroit étant prévu à cet effet entre l'élément de pression (8) et le perçage de guidage, et **en ce que** l'élément de pression (8) présente une surface tronconique centrée, la broche de machine (21) exerçant une contrainte de centrage sur l'élément de pression (8) grâce à un accouplement entre deux surfaces tronconiques correspondantes (16).

2. Mandrin porte-foret miniature selon la revendication 1, **caractérisé en ce que** le perçage de guidage est prévu dans le bouchon de mandrin (3).

3. Mandrin porte-foret miniature selon la revendication 1 ou 2, **caractérisé en ce que** le bouchon de mandrin (3) est enfoncé, fixe en rotation, dans la tête de mandrin (2) grâce à un moletage (13).

4. Mandrin porte-foret miniature selon la revendication 3, **caractérisé en ce que** le moletage (13) s'étend seulement sur une zone longitudinale partielle du bouchon de mandrin, et **en ce que** les zones longitudinales non moletées sont introduites dans un perçage correspondant de la tête de mandrin grâce à des ajustements sans jeu.

5. Mandrin porte-foret miniature selon la revendication 3 ou 4, **caractérisé en ce que** le bouchon de mandrin (3) forme, côté extrémité, une collerette périphérique qui est posée comme butée d'emboîtement sur la surface frontale arrière de la tête de mandrin (2), et **en ce qu'**une encoche annulaire (25) est prévue sur le bouchon de mandrin, entre la collerette périphérique et l'extrémité du moletage.

6. Mandrin porte-foret miniature selon l'une des revendications 1 à 5, **caractérisé en ce que** la longueur de l'élément de pression (8) dans le perçage de guidage correspond au moins approximativement au diamètre de l'élément de pression.

7. Mandrin porte-foret miniature selon l'une des revendications 1 à 6, **caractérisé en ce que** l'élément de pression (8) se compose d'un matériau plein qui est allégé de manière symétrique en rotation.

8. Mandrin porte-foret miniature selon la revendication 7, **caractérisé en ce que** l'élément de pression (8) présente une rainure circonférentielle (11) sur sa circonférence.

9. Mandrin porte-foret miniature selon la revendication 7 ou 8, **caractérisé en ce que** l'élément de pression (8) est creux (15) à la manière d'une douille.

10. Mandrin porte-foret miniature selon l'une des revendications 1 à 9, **caractérisé en ce que** l'extrémité de l'élément de pression (8) située côté broche présente un diamètre extérieur réduit par rapport au diamètre intérieur du bouchon de mandrin, et **en ce qu'**une broche de machine cylindrique creuse (21) fait saillie dans l'espace annulaire antre le diamètre intérieur du bouchon de mandrin (3) et le diamètre extérieur de l'élément de pression (8).

11. Mandrin porte-foret miniature selon la revendication 10, **caractérisé en ce que** l'élément de pression (8) présente, au fond (18) de l'espace annulaire, une surface tronconique centrée (16) sur laquelle est posée une surface tronconique correspondante de la broche de machine (21).

12. Mandrin porte-foret miniature selon l'une des revendications 1 à 11, **caractérisé en ce que** l'enveloppe de mandrin présente des surfaces pour clé (22) qui se font face par paire.

13. Mandrin porte-foret miniature selon la revendication 12, **caractérisé en ce que** les surfaces pour clé sont prévues sur le bouchon de mandrin (3).
